Europäisches Patentamt

European Patent Office

Office européen des brevets

(11) Publication number: **0 284 080 B1**

## EUROPEAN PATENT SPECIFICATION

(45) Date of publication of patent specification: **27.10.93**　(51) Int. Cl.⁵: **H04N 5/262**

(21) Application number: **88104775.7**

(22) Date of filing: **24.03.88**

(54) **Video special effects apparatus.**

(30) Priority: **26.03.87 US 30937**

(43) Date of publication of application:
**28.09.88 Bulletin 88/39**

(45) Publication of the grant of the patent:
**27.10.93 Bulletin 93/43**

(84) Designated Contracting States:
**DE FR GB NL**

(56) References cited:
**DE-B- 2 225 501**
**GB-A- 1 532 111**
**US-A- 4 183 061**

**FUNKSCHAU, No 21, 1981, München - HORST
LICHTENHELD "Farbvideo-Trickmischpult"
pages 59-65**

(73) Proprietor: **The Grass Valley Group, Inc.**
**P.O.Box 1114**
**13024 Bitney Springs Road**
**Grass Valley California 95945(US)**

(72) Inventor: **Chaplin, Daniel J.**
**11878 Brentwood Court**
**Nevada City California 95959(US)**

(74) Representative: **Baillie, Iain Cameron et al**
**c/o Ladas & Parry,**
**Altheimer Eck 2**
**D-80331 München (DE)**

## Description

This invention relates to video special effects apparatus.

A wipe effect is carried out using a production switcher which receives first and second synchronized video signals (video 1 and video 2) by generating a control signal which is synchronized to the video signals and varies in a predetermined fashion between two extreme values, which may be represented as one and zero. For example, in the case of a horizontal wipe, in which the transition between two input scenes appears as a vertical line or stripe which moves across the output scene from one side to the other, the control signal has a ramp waveform which repeats at line rate, the start point of the ramp progressing through the line interval from field to field. In a preset pattern wipe, the control signal is designed so that a selected portion of the background scene (video 1) is replaced by the corresponding portion of an insert scene (video 2), and the size of the area of the output scene that is occupied by the insert scene increases to a preset limit while its geometrical shape remains the same.

The output signal video C of a video mixer which receives the video signals video A and video B and a control signal may be expressed as

$$\text{video C} = \text{control} \times \text{video A} + (1\text{-control}) \times \text{video B}$$

If video B represents black (which may be achieved by grounding the video B input terminal of the mixer) and the value of the control signal is increased from zero to one, the video C scene is a progressively darker replica of the video A scene. Mixing of a video signal to ground in this manner can be used to provide a shadow effect.

Funkschau, No. 21, 1981, Munchen, Horst Lichtenfeld, "Farbvideo-Trickmischpult", pages 59 - 65, discloses a colour video special effects mixing apparatus having means for generating mix control signals, means for combining video signals under control of the mix control signals to produce an output video signal, and means for varying a visual quality, for example brightness, of one of the video signals in the output video signal.

According to the present invention there is provided a video effects apparatus for use with a mixer, the mixer receiving a first input video signal (**BACKGROUND**) representing a first scene and a second input video signal (**INSERT**) representing a second scene and providing an output video signal representing a composite scene, the video effects apparatus having a pattern generator for generating a mix control signal which, when applied to the mixer, defines a geometrical shape in the composite scene of the transition between a portion of the first scene and a portion of the second scene, size control means for generating a size control signal which is applied to the pattern generator to cause a first area of the composite scene that is occupied by the portion of the first scene to change relative to a second area of the composite scene that is occupied by the portion of the second scene while the geometrical shape of the transition remains the same, and **being characterized by**:

means for generating a response to a transition signal from a transition control within the size control means a shadow density signal corresponding to one of the first and second areas, the generating means including means for providing a present shadow signal representative of the maximum amount by which the shadow density signal varies and means for combining the present shadow signal with the transition signal to provide the shadow density signal; and

means for combining the shadow density signal with one of the input video signals or means for combining the shadow density with the output video signal to vary the intensity of one of the first and second areas.

A preferred embodiment of the present invention is video effects apparatus comprising a pattern generator for generating a mix control signal which, when used to control the combination of first and second input video signals to provide an output video signal, defines the geometrical shape in a composite output scene of a transition between a first component scene represented by the first input video signal and a second component scene represented by the second video signal. The pattern generator responds to a size control signal by causing the mix control signal to vary in a manner such that the area of the composite output video scene that is occupied by the first component scene changes relative to the area of the second component scene while the geometrical shape of the transition between the component scenes remains the same. A shadow generator generates a signal which adjusts the visual characteristics of the second component scene synchronously with the variation of the control signal.

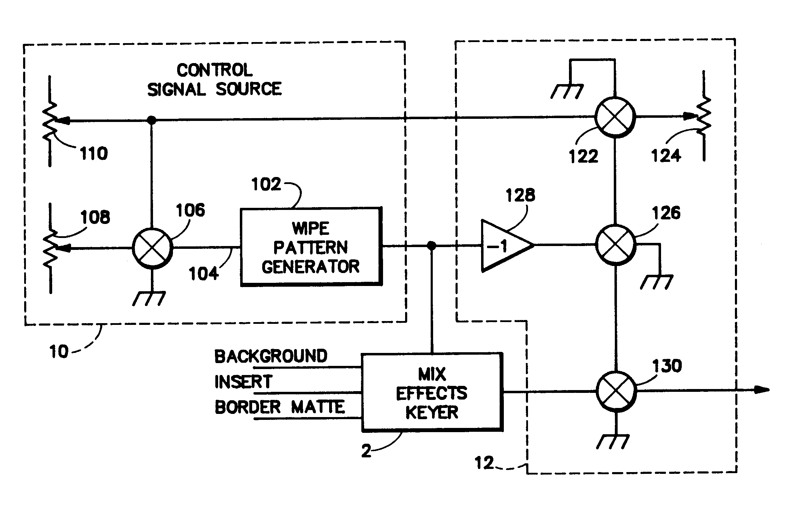

For a better understanding of the invention, and to show how the same may be carried into effect, reference will now be made, by way of example, to the accompanying drawing, the single figure of which is a block diagram of a mix effects keying apparatus.

The mix effects keying apparatus illustrated in the drawing comprises a mix effects keyer 2 which receives several video signals. These video signals include a background video signal, an insert video signal and a border matte video signal. The mix effects keyer also receives mix control signals from a control signal source 10 which includes a wipe pattern generator 102. The wipe pattern generator 102 generates a mix control signal which, when applied to the mix effects keyer 2, combines the insert video signal with the background video signal in a manner such that the output signal of the mix effects keyer represents a scene in which a portion of the background scene has been replaced by a corresponding portion of the insert scene. The voltage of the mix control signal varies between two levels which can be represented as zero, corresponding to 100% background, and one, corresponding to 100% insert. The geometrical shape of the portion of the background scene that has been replaced is determined by the waveform of the mix control signal which in turn depends on the nature of the pattern generator.

The pattern generator 102 has a size control input 104 at which it receives a size control signal. The size control signal is provided by a multiplier 106 which receives input signals from a preset size potentiometer 108 and a transition potentiometer 110. The size of the portion of the background scene defined by the mix control signal depends upon the voltage of the size control signal received at the input terminal 104. This voltage depends on the product of the voltage at the wiper of the preset size potentiometer 108 and the voltage at the wiper of the transition potentiometer 110. The range of output voltages provided by the potentiometer 108 represents the maximum range of sizes of the preset pattern that can be defined by the mix control signal. Normally, the potentiometer 108 is set before a mix effect is performed. The transition potentiometer 110 is driven by a lever arm and in order to carry out a mix effect it is normally driven through its full range from 0 v to a maximum value. Preferably, the multiplier 106 is such that the range of output voltages provided by the transition potentiometer 110 corresponds to a range of multipliers from zero to one, and accordingly the voltage at the size control terminal 104 has a range of values from zero to the voltage at the wiper of the potentiometer 108. Therefore, as the lever arm is swept from the position corresponding to a multiplier of zero to the position corresponding to a multiplier of one, the size of the portion of the background scene that is replaced by the corresponding portion of the insert scene increases from zero up to a maximum value determined by the setting of the potentiometer 108, while the geometrical shape of the area that is replaced remains the same, e.g. a circle or square. In a more complex form of control signal source, the wipe pattern generator 102 might provide two mix control signals for controlling mixing among the background video, the insert video and the border matte video, such that the portion of the insert scene that appears against the background scene is surrounded by a border matte of uniform color.

The manner of operation of the mix effect keyer and control signal source as described so far is conventional.

In addition to the conventional elements described above, the mix effects keying apparatus comprises a shadow control signal generator 12. The shadow control signal generator includes a multiplier 122 which has one input at which it receives the voltage provided by the transition potentiometer 110. The multiplier 122 has a second input which is connected to the wiper of a shadow density potentiometer 124. The multiplier 122 is such that the range of output voltages provided by the transition potentiometer 110 corresponds to a range of multipliers from zero to one, and therefore the output signal of the multiplier 122 has a range of voltages from zero up to the voltage at the wiper of the potentiometer 124 as the lever arm is swept through its range of movement. The output signal of the multiplier 122 is applied to one input of a second multiplier 126.

The mix control signal provided by the control signal source 10 is also applied to the shadow control signal generator 12. The mix control signal is received by an inverter 128 which provides an output signal which is the complement of the mix control signal. The output of the inverter 128 is applied to the second input of the multiplier 126, and accordingly the multiplier 126 provides an output signal which is the complement of the mix control signal but is scaled by the setting of the potentiometer 124 and by the position of the lever arm. If the voltage of the mix control signal corresponds to one, the output signal of the mixer 126 represents zero regardless of the potentiometer 124 and the position of the lever arm, whereas if the voltage of the mix control signal corresponds to zero, the output signal of the mixer 126 depends on the position of the lever arm control 110 and has a maximum value which depends on the setting of the potentiometer 124.

The output signal of the mixer 126 is applied to a further mixer 130. The mixer 130 receives the output signal of the mix effects keyer 2 at its second input, and its third input is grounded. Therefore, for portions of the scene for which the mix control signal is zero (i.e. 100% background), the output signal of the multiplier 130 corresponds to the input signal of the mixer, i.e. the background video signal, but attenuated in dependence upon the setting of the shadow density potentiometer 124 and the position of the lever arm control 110, so that the background scene is shadowed. For portions of the scene for which the mix control signal is one (i.e. 100% insert), the output signal of the mixer 126 is zero and therefore the output signal of the mixer 130 is the same as its input signal.

The illustrated production switcher may also be used to provide a spotlight affect, in which the field surrounding a selected area of a scene is faded so as to highlight the selected area. This is accomplished by using the same video signal for both the background video and the insert video. As the lever arm is moved from its zero multiplier position for its unity multiplier position, the field surrounding a progressively enlarging area of the scene becomes progressively darker, but the distribution of hue and saturation over the output scene is the same as the distribution of hue and saturation over the background scene.

It will be appreciated that the present invention is not restricted to the particular embodiment that has been described and illustrated, and that variations may be made therein without departing from the scope of the invention as defined in the appended claims. For example, the mixer 130 may be placed at the input of the mix effects keyer, so that the background scene is shadowed prior to insertion of the insert scene.

**Claims**

1. Video effects apparatus for use with a mixer (2), the mixer receiving a first input video signal (BACKGROUND) representing a first scene and a second input video signal (INSERT) representing a second scene and providing an output video signal representing a composite scene, the video effects apparatus having a pattern generator (102) for generating a mix control signal which, when applied to the mixer, defines a geometrical shape in the composite scene of the transition between a portion of the first scene and a portion of the second scene, size control means (106-110) for generating a size control signal (104) which is applied to the pattern generator to cause a first area of the composite scene that is occupied by the portion of the first scene to change relative to a second area of the composite scene that is occupied by the portion of the second scene while the geometrical shape of the transition remains the same, and being characterised by:
    means (12) for generating in response to a transition signal from a transition control (110) within the size control means a shadow density signal corresponding to one of the first and second areas, the generating means including means (124) for providing a preset shadow signal representative of the maximum amount by which the shadow density signal varies and means (122) for combining the preset shadow signal with the transition signal to provide the shadow density signal; and
    means (130) for combining the shadow density signal with one of the input video signals or means (130) for combining the shadow density with the output video signal to vary the intensity of one of the first and second areas.

2. Visual effects apparatus according to claim 1 wherein the size control means and the providing means each are characterised by a potentiometer (108, 124), and the size control means and the combining means in the generating means each are characterised by a multiplier (106, 122) connected to receive both the transition signal and the signals provided by the respective potentiometers to provide output signals that are proportional to the transition signal.

3. Visual effects apparatus according to claim 2 wherein the generating means is further characterised by:
    an inverter (128) connected to receive the mix control signal; and
    a third multiplier (126) connected to receive the inverted mix control signal and the shadow density signal to produce a scaled shadow density signal for input as the shadow density signal to the combining means.

**Patentansprüche**

1. Vorrichtung für Video-Effekte zur Verwendung mit einem Mischer (2), dadurch gekennzeichnet, daß der Mischer ein erstes Eingangsvideosignal (HINTERGRUND) empfängt, welches ein erstes Bild darstellt, sowie ein zweites Videosignal (EINFÜGUNG), welches ein zweites Bild darstellt und wobei der Mischer ein Ausgangsvideosignal bereitstellt, welches ein Mischbild darstellt, wobei die Vorrichtung für Video-Effekte zur Erzeugung eines Mischungssteuersignals einen Bildmustergenerator (102) aufweist, wobei dieses Signal bei Zufuhr zu dem Mischer, in dem Mischbild eine geometrische Form des Übergangs zwischen einem Teil des ersten Bilds und einem Teil des zweiten Bilds definiert, dadurch gekennzeichnet, daß die Vorrichtung ferner eine Größensteuerungseinrichtung (106-110) zur Erzeugung eines Größensteuerungssignals (104) umfaßt, wobei das Signal dem Bildmustergenerator zugeführt wird, um zu bewirken, daß sich ein erster Bereich des Mischbilds, der von dem Teil des ersten Bilds belegt wird, relativ zu einem zweiten Bereich des Mischbilds, der von dem Teil des zweiten Bilds belegt wird, verändert, wobei die geometrische Form des Übergangs gleich bleibt und ferner gekennzeichnet durch:

eine Einrichtung (12) zur Erzeugung eines Schattendichtesignals, als Reaktion auf ein Übergangssignal von einer Übergangssteuerung (110) innerhalb der Größensteuerungseinrichtung, wobei das Schattendichtesignal einem der ersten oder zweiten Bereiche entspricht, wobei die Erzeugungseinrichtung eine Einrichtung (124) zur Bereitstellung eines voreingestellten Schattensignals umfaßt, welches das maximale Ausmaß darstellt, um welches das Schattendichtesignal variiert, ferner eine Einrichtung (122) zur Kombination des voreingestellten Schattensignals mit dem Übergangssignal, um für das Schattendichtesignal zu sorgen; und

eine Einrichtung (130) zur Kombination des Schattendichtesignals mit einem der Eingangsvideosignale, oder eine Einrichtung (130) zur Kombination der Schattendichte mit dem Ausgangsvideosignal, um so die Intensität entweder des ersten oder des zweiten Bereichs zu verändern.

2. Vorrichtung für Video-Effekte nach Anspruch 1, dadurch gekennzeichnet, daß die Größensteuerungseinrichtung und die Bereitstellungseinrichtung beide durch einen Potentiometer (108, 124) gekennzeichnet sind und wobei die Größensteuerungseinrichtung und die Kombinationseinrichtung in der Erzeugungseinrichtung beide durch einen Verfielfacher (106, 122) gekennzeichnet sind, der so geschaltet ist, daß er sowohl das Übergangssignal als auch die von den entsprechenden Potentiometern bereitgestellten Signale empfängt, um für Ausgangssignale zu sorgen, welche proportional zu dem Übergangssignal sind.

3. Vorrichtung für Video-Effekte nach Anspruch 2, dadurch gekennzeichnet, daß die Erzeugungseinrichtung ferner durch folgendes gekennzeichnet ist:

einen Wechselrichter (128), der zum Empfang des Mischungssteuersignals geschaltet ist; und

einen dritten Verfielfacher (126), der zum Empfang des invertierten Mischungssteuersignals und des Schattendichtesignals geschaltet ist, um ein normiertes Schattendichtesignal zur Eingabe als Schattendichtesignal an die Kombinationseinrichtung zu erzeugen.

**Revendications**

1. Appareil pour effets vidéo utilisable avec un mélangeur (2), le mélangeur recevant un premier signal vidéo d'entrée (ARRIERE-PLAN) qui représente une première scène et un deuxième signal vidéo d'entrée (INSERTION) qui représente une deuxième scène, et fournissant un signal vidéo de sortie qui représente une scène composite, l'appareil pour effets vidéo comprenant un générateur de configuration (102) pour engendrer un signal de commande de mixage qui définit, lorsqu'il est appliqué au mélangeur, une forme géométrique dans la scène composite de la transition entre une partie de la première scène et une partie de la deuxième scène, des moyens de commande de dimension (106-110) pour engendrer un signal de commande de dimension (104) qui est appliqué au générateur de configuration afin de provoquer un changement d'une première région de la scène composite, qui est occupée par la partie de la première scène, par rapport à une deuxième région de la scène composite qui est occupée par la partie de la deuxième scène, tandis que la forme géométrique de la transition reste inchangée, caractérisé en ce qu'il comprend :

des moyens (12) pour engendrer, en réponse à un signal de transition fourni par une commande de transition (110) prévue dans les moyens de commande de dimension, un signal de densité d'ombre correspondant à une des première et deuxième régions, les moyens de génération comportant des moyens (124) de fourniture d'un signal d'ombre prédéterminé représentatif de la quantité maximale dont le signal de densité d'ombre varie, et des moyens (122) de combinaison du signal d'ombre prédéterminé avec le signal de transition pour fournir le signal de densité d'ombre ; et

des moyens (130) de combinaison du signal de densité d'ombre avec un des signaux vidéo d'entrée ou des moyens (130) de combinaison du signal de densité d'ombre avec le signal vidéo de sortie, pour modifier l'intensité d'une des première et deuxième régions.

2. Appareil pour effets visuels suivant la revendication 1, dans lequel les moyens de commande de dimension et les moyens de fourniture sont caractérisés chacun par un potentiomètre (108, 124), et les moyens de commande de dimension et les moyens de combinaison dans les moyens de génération sont caractérisés chacun par un multiplicateur (106,122) connecté de manière à recevoir à la fois le signal de transition et les signaux fournis par les potentiomètres respectifs, pour fournir des signaux de sortie qui sont proportionnels au signal de transition.

3. Appareil pour effets visuels suivant la revendication 2, dans lequel les moyens de génération sont caractérisés en outre par :

un inverseur (128) connecté de manière à recevoir le signal de commande de mixage ; et

un troisième multiplicateur (126) connecté de manière à recevoir le signal de commande de mixage inversé et le signal de densité d'ombre, afin de produire un signal de densité d'ombre changé d'échelle pour entrée comme signal de densité d'ombre aux moyens de combinaison.